# EUROPEAN PATENT APPLICATION

(11) **EP 1 106 968 A1**
(43) Date of publication of application: **13.06.2001**
(21) Application number: 99204047.7
(22) Date of filing: 30.11.1999
(51) Int. Cl.: G01C 21/34

(54) **Navigation system**

(71) Applicant: Mannesmann VDO Aktiengesellschaft, 60388 Frankfurt am Main (DE)
(72) Inventor: Klein, Bernhard, 35576 Wetzlar (DE)
(74) Representative: Klein, Thomas, Dipl.-Ing.

(57) **Abstract**

A route planning system is provided with various interlinked facilities, including a user I/O facility, a route planning facility, a position determination facility, and a destination table facility In particular, the route planning facility is arranged for under control of a set of destination location requests received from a user, and one or more timing indications each associated to a respective destination location request, sorting said destination location requests in accordance with a feasible route to be travelled according to the set of destination locations and associated timing indications and generating a route listing that accommodates a route.

## Description

The invention relates to a route planning system provided with various interlinked facilities, including a user I/O facility, a route planning facility, a position determination facility, and a destination table facility system. US Patent specification 5,243,529 discloses a system wherein a one-day travel schedule comprises a plurality of destination locations each associated with a scheduled arrival time. As a vehicle is moving, a controller device will periodically select an as yet unserviced destination location that has a scheduled arrival time closest to the actual time instant. The prior art organization therefore undertakes to schedule the destination locations in accordance to what has been effected in the past. It is clear that in adverse situations, a scheduled destination may remain unserved. Furthermore, on a planning level the prior art is essentially static, because it is impossible to enter supplementary data that could be co-determinative for the route to be taken. Moreover, the prior art takes the route schedule for granted, whereas the present inventor has recognized that often, the data provided to the system may be incomplete and/or redundant.

In consequence, amongst other things, it is an object of the present invention to provide a route planning system that allows to enter a set of interval points or destination locations, provided with associated timing indications, and which system then will therefrom generate a route and associated timing schedule that accommodate to the set of interval points and their associated timing indications, while allowing to supplement or correct in case of incomplete and/or redundant indications.

Now therefore, according to one of its aspects the invention is characterized in that said route planning facility is arranged for under control of a set of destination location requests received from a user, and one or more timing indications each associated to a respective destination location request, sorting said location destination requests in accordance with a feasible route to be travelled according to the set of destination locations and associated timing indications and generating a route listing that accommodates a route.

The invention also relates to a method for operating a route planning system as claimed in Claim 1. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1 shows an overall diagram of a system according to the invention;
Figure 2 is an input example representing a user's requirements;
Figure 3 is the result output presented by the system;
Figure 4 is an applicable flow chart.

The invention allows a navigation and route planning system to be able to estimate the travel time between two locations, so that the entry of timing indications may be extended. This helps a user with the entering of a planned journey.

Prior art navigation systems allow the entering of one or more destination locations, but generally not the entering of a time instant or time duration. The present invention allows the selectable items with
- the entering of a requested arrival time
- the entering of a requested departure time
- the entering of a requested time of stay

If only one of the above three categories has been entered, the system allows the calculation or estimation, and subsequent presentation of the other two categories to a user person.

Prior art systems for route planning allow the entering of destination locations according to the sequential order in which they have to be reached. However, for planning an optimum route, it would be advantageous to allow the entering of those destination locations in an arbitrary sequence. This also will allow the late entering of additionally required destination locations. First, such a list of destinations will necessitate an automatical sort that may take into account one or both of the
- spatial distribution of the destination locations
- a timetable in its broadest sense

The invention allows a system to present all these advantages to a user person by allowing to enter an arrival time, a departure time, or a time of stay. Furthermore, the system allows to enter for a particular destination location any of the following combinations, which donot need to be uniform over the set of entered destination locations:
- arrival time and time of stay
- departure time and time of stay
- arrival time and departure time.

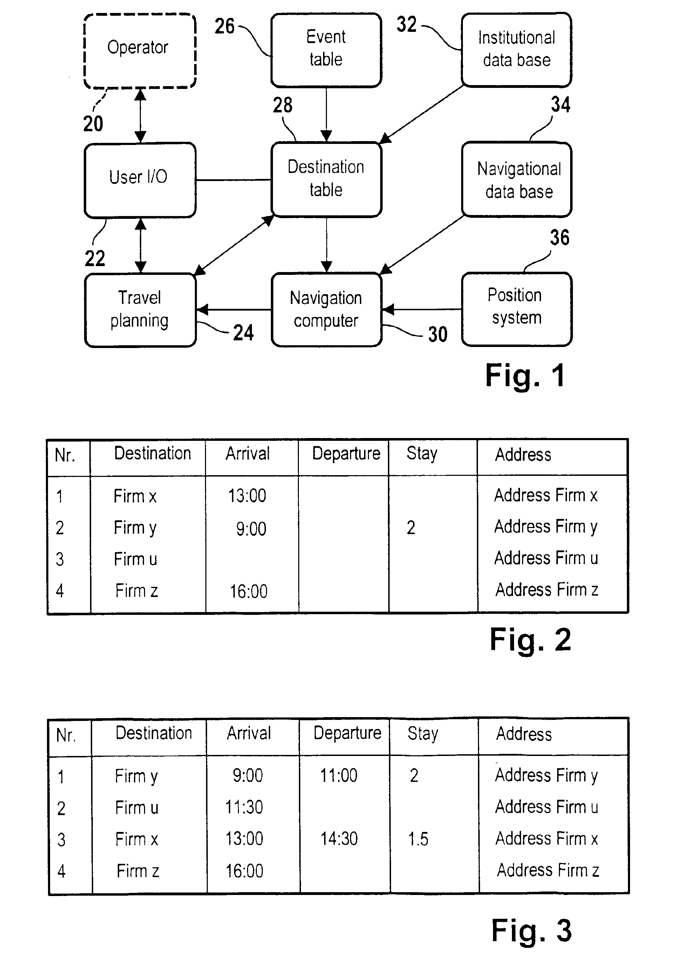

The above specifying defines the sequence in which the destination locations will be reached. If for a particular destination location no arrival time and/or no departure time has been specified, the location in question will be sorted while taking into account its specified time of stay. If neither a time of stay has been specified, then the destination location will be sorted in accordance with its relative position with respect to other destination locations, while taking into account the other location and time quantity specifications. The system may not only sort the list of destination locations anew, but may also warn a user that the necessary travel time will not allow to reach a particular destination location at its specified arrival time instant. The user will also receive a notification when temporal sequence and spatial order donot mutually conform. In such case, the system may propose amendments. An example will be given with reference to Figures 2 and 3.

Figure 1 shows an overall diagram of a system according to the invention, that by way of example has nine subsystems, as follows. Block 20 symbolizes a user person who wants to be guided by the system. The user interfaces bidirectionally to the system's I/O that may have various hardware and software facilities such as keyboard, mouse, speech, other audio, and display. Block 32 represents an Institutional Data Base that may store various entries, such as representing hotels, restaurants or other facilities, together with associated data such as location, business hours, and actual services present at those facilities. Block 34 represents a Navigational Data Base that may comprise a road network, together with physical distances or travel time distances between representative points, road classification, and others. Block 36 represents a Position System that detects an actual position of the vehicle, such as through using a well known GPS system. Block 26 represents an Event Table, such as a road block or jam situation that has been communicated by a higher level authority such as as a **R**adio **D**ata **S**ystem, and which event may cause certain destination to be no longer reacheable, or only in a delayed manner, or which may necessitate the vehicle to take a detour.

Block 28 represents a Destination Table that contains the destination locations and associated timing indications, such as entered by the user through block 22, and subject to information from the Travel Planning in block 24, the Institutional Data Base in Block 32, and the Event Table in block 26. Block 30 represents a Navigational Computer that is fed with the Destination Table from block 28, with the Navigational Data Base from block 34, and with the Position from block 36; from these informations the system can figure out a route to be taken, which route contains various interval points and furthermore, timing indications associated to the various Interval Points. Block 24 represents the Travel Planning that is fed by the information from the navigational computer 30, and which block 24 furthermore bidirectionally interfaces to the Destination Table in Block 28, and to the User I/O in Block 22. The Travel Planning will update the Destination Table if it fails to find a correct solution for attaining all Interval Points, and it will signal the User what Route is to be taken, as well as will signal the above Failure to allow the user to modify the set of Interval Points and/or associated timing indications. For the invention proper, the Event Table 26 and Institutional Data Base 32 are no strict prerequisites.

Figure 2 is an input example representing a user's requirements. As shown, the user wants to visits four firms x, y, u, z, each with its appropriate address provided. Firms x, y, z have their respective Arrival Times specified, the interval at firm y has also its its Stay Length specified. Firm u has nothing specified. Although in the figure, all times have been specified as absolute times, also relative times may be specified, such as the relative arrival time at a firm that is another fimr's neighbour.

Figure 3 is the result output presented by the system as meeting the user's requirements listed in Figure 2. First, the three firms x, y and z have been sorted according to their arrival times. Furthermore , the departure times, as well as the times of stay have been calculated for firms x and y. Furthermore, the system has sought for a suitable instant to arrive at firm u, and has this firm displayed at the correct sequential order. For this firm, no departure time has been specified, which indicates that the time of stay may be vanishingly small, such as for the case that driver only has deposit o small letter, or run a similar errand. If the user does not agree however, a signalization to this effect may be entered, so that the system may recalculate the route. Using the Navigational Data Base 34 of Figure 1, the system has come up with a suitable travel schedule. In other cases, the system could signal that another sequence among the four firms to be visited would be necessary. For example, it could be necessary to visit firm x at another instant, when the available time between firms y and z were too short to wedge a 1.5 hour's stay at firm x therebetween.. In such case, the user could be requested to indicate another sequence of the visits, or could even relinquish the requirement for a specified sequence, and leave it to be determined by the system itself. Still another case could occur, where the system would for example find that the three firms were too far from each other, given the various required Stay lengths, to be visited on a single day.

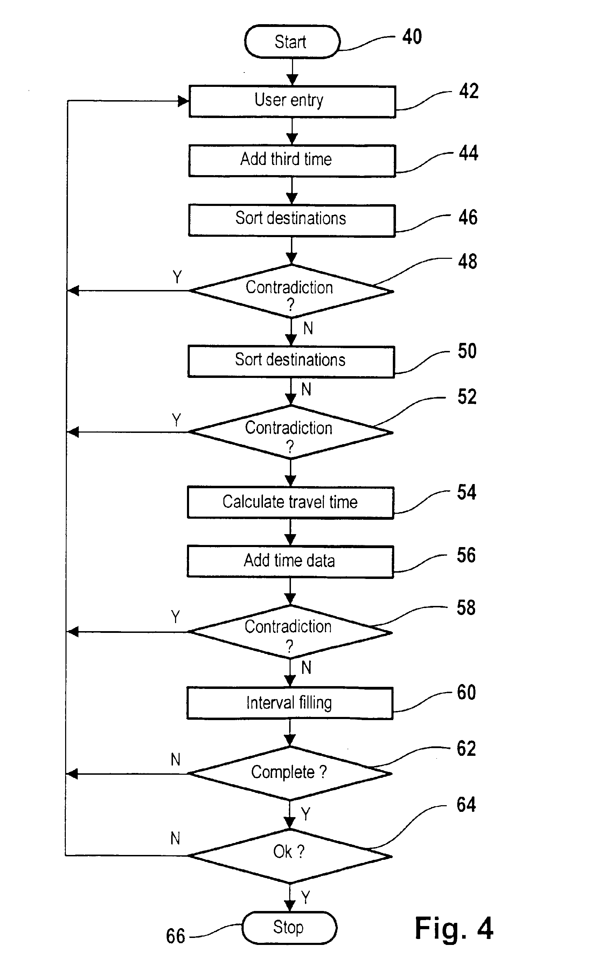

Figure 4 is an applicable flow chart of the operation of the route planning system according to the invention. In block 40, the system is started, and the necessary hardware and software facilities are assigned. In block 42, the user enters various informations, in particular, a set of destination locations with associated timing indications. For simplicity, no waiting or dialog organization has been added with respect to the operations in block 42. In block 44, the system checks all destinations that have two timing indications, and adds the third timing indication, such as the departure time in case both the arrival time and the time of stay had been given. In block 46, the system sorts all destination locations that have a known arrival time, either as entered by the user, or as calculated by the system. In block 48, the system checks for the occurrence of contradictions or conflicts, for example, in that the vehicle should be present simultaneously at two different locations. If no conflict, the flow chart column is followed.

If a contradiction exists indeed (Y), the system goes back to block 42, to allow the user to make amendments. In particular, the system may highlight any existing contradiction by adding colour, blinking or other attention-grabbing mechanisms on a vissual display, and/or acoustically identifying such contradictions. Also, a ranking among the various conflicts may be signalled, such as according to their relative position in the sequence planned for the destinations. The user may delete destinations, advance or delay arrival and/or departure times, shorten times of stay, and on the whole, effect all amendments intended to cram a visiting schedule into the available time interval. If this operation changes an earlier *inputted* time, the later time will overrule. If this operation changes an earlier *calculated* time, the later time will overrule. If the data for a particular destination location become conflicting, the timing indications acquired most recently remain valid, and if necessary, earlier ones will be recalculated. In block 50, the sorting of destination locations is executed once more, while also taking into acount the destinations that have a departure time but no known or calculated arrival time. The sorting may be based on various premises, such as according to the various departure times, through taking arrival times that are *estimated* from the departure times rather than calculated, through taking the unknown arrival times as being *equal* to the associated departure times, or other. In block 52, the check for contradictions is executed once more, in a manner corresponding to that of of block 48. In block 54, the travel times between the various sorted destinations are calculated, and on the basis thereof, the as yet unknown arrival times, departure times, and times of stay are added. In block 58, the check for contradictions is executed once more, in a manner corresponding to that of of block 48. In block 60, the travelling schedule so produced is checked for free interval spaces, and as based thereupon, the system undertakes to insert any as yet unassigned destination location therein. In block 62, the system checks whether all destination locations have been entered into a feasible schedule. If not, the user should in block 42 amend the input data. In block 64, the user is asked for consent. If yes, the system goes to block 66, wherein the procedure is terminated and the various facilities are relinquished.

During the actual travel, it remains possible to amend the schedule. This amending may be effected by the user person, in the form of speech, keystrokes or otherwise, and may pertain to the inserting or deleting of interval points, the amending of wanted stay times, and various other. Also, the guiding of the vehicle may be changed in a dynamic manner, such as under the influence of external events or situations, such as traffic jams or rainstorms, or rather the discontinuance of such events or adverse situations. Such aspects may be dynamically communicated to the vehicle by known systems such as **R**adio **D**ata **S**ystem-**TMC**, MobileRadio, and others. This arrival of new information may require the driver to maintain to some degree a continuing and dynamic dialog with the overall system. Such could require the driver to change plans, because the dynamic situation may have any type of influence on the planned route.

The person skilled in the art of route planning will recognize further policies to be followed within the ambit of the present invention, the scope of which has justfully been determined by the appended Claims hereinafter.

## Claims

1. A route planning system provided with various interlinked facilities, including a user I/O facility, a route planning facility, a position determination facility, and a destination table facility, characterized in that said route planning facility is arranged for under control of a set of destination location requests received from a user, and one or more timing indications each associated to a respective destination location request, sorting said location destination requests in accordance with a feasible route to be travelled according to the set of destination locations and associated timing indications and generating a route listing that accommodates a route.

2. A system as claimed in Claim 1, characterized by allowing to receive said destination location requests in a dynamic manner for as based thereon updating an already generated route listing.

3. A system as claimed in Claim 1, characterized in that one or more timing indications indicate a stay length at an associated destination location or an absolute or relative clock time value associated to a requested presence at an associated destination, and said system before said sorting undertakes to calculate arrival time, departure time, or time of stay for any destination that lacks exactly one of those three indications.

4. A system as claimed in Claim 1, characterized by route calculating means for assigning travel times to said route and on the basis thereon generating further timing indications with respect to destinations with one or more as yet unspecified timing indications.

5. A system as claimed in Claim 1, characterized by search means for searching a free time interval in a calculated route and assign means for thereupon assigning an unassigned destination to said free time interval.

6. A system as claimed in Claim 1, characterized by conflict signalling means for signalling any conflict among two or more destination locations and/or their associated arrival time instants, departure time instants, time intervals of stay, and/or travel time interval between those two destination locations, and having return means for tehrupon returning to an earlier processing stage to allow a user to amend said set of destination location requests.

7. A system as claimed in Claim 1, characterized by allowing non-uniformity in category among the timing indications associated with the set of destination location requests received.

8. A system as claimed in Claims 3 or 4, characterised by having a speech reception facility for allowing a user person to enter amendment and/or reject signals in the form of speech.

9. A system as claimed in Claim 1, characterised in that said generating is effected in a dynamic manner to allow for changes in an actual position and/or external conditions.

10. A system as claimed in Claim 5, characterised by further having receiving means for receiving external condition signalizations from an overall long-range signalization or broadcast system (such as RDS-TMC or Mobile Radio).

11. A method for operating a route planning system as claimed in Claim 1, that is provided with various interlinked facilities, including a user I/O facility, a route planning facility, a position determination facility, and a destination table facility, characterized in that said method comprises the steps of user-entering into the system a set of destination location requests, and one or more timing indications each associated to a respective destination location request, and user-inducing said system to generate a route listing that accommodates a route to be travelled according to the set of destination locations and associated timing indications.
